Europäisches Patentamt

European Patent Office

Office européen des brevets

(19)

(11) Publication number: **0 289 271**
**A2**

(12)

# EUROPEAN PATENT APPLICATION

(21) Application number: **88303764.0**

(22) Date of filing: **27.04.88**

(51) Int. Cl.4: **G 08 C 25/00**
**B 60 R 16/02**

(30) Priority: **29.04.87 GB 8710197**

(43) Date of publication of application:
**02.11.88 Bulletin 88/44**

(84) Designated Contracting States:
**AT BE CH DE ES FR GB GR IT LI LU NL SE**

(71) Applicant: **GROUP LOTUS PLC**
**Norwich Norfolk NR14 8EZ (GB)**

(72) Inventor: **Norris, Peter David**
**The Ibstock Wymondham Road Wreningham**
**Norfolk NR16 1AT (GB)**

**MacDonald, Anthony Malcolm**
**Highfields Mill Road Barnham Broom**
**Norfolk (GB)**

(74) Representative: **Jones, Ian et al**
**G. RATHBONE & CO. High Holborn House 52-54 High**
**Holborn**
**London WC1V 6RY (GB)**

(54) **Intelligent wiring system.**

(57) An intelligent wiring system for a road vehicle has a master unit (1) linked to slave units (4) in communication with vehicle equipment by a dedicated multiplex highway (2). The system operates to bring the equipment to a failsafe condition, selectively or in response to detection of a fault, in which the vehicle can be operated manually, the equipment being preferably then grounded. The slave units can be of modular construction so as to facilitate adaptation to different items of vehicle equipment and the system can be operated at a speed such that the highway can be constituted by conventional automobile cable.

FIG. 1.

EP 0 289 271 A2

Bundesdruckerei Berlin

**Description**

## INTELLIGENT WIRING SYSTEM

The invention relates to a so-called intelligent wiring system in which information is conveyed between a master or control unit and at least one slave unit on a dedicated multiplexed highway.

Various systems of this kind have been developed for example for use in vehicles, in order to perform all the control functions conventionally performed by vehicle electrical systems, together with additional control and information display functions which lend themselves to treatment by electronic information handling techniques. Such wiring systems are for the most part complicated and there remains a need for a relatively simple system which provides adequate safeguards in the event of system failure.

The invention accordingly provides an intelligent wiring system in which the or each slave unit or station is arranged to assume a failsafe condition, or to bring to such a failsafe condition the or each item of equipment with which it is in communication, in response to a predetermined event such as system failure and/or a manual override control input.

The system of the invention is conveniently embodied with a three-wire highway between the master and each slave unit, of which one wire carries information, a second carries clock pulses for co-ordinating master and slave unit operation, and the third carries default information between default logic circuitry in the two units, whereby the fail-safe condition of the system is ensured. The third wire can however be employed for carrying status information generally, in particular signals for initiating system operation after a period in which it has been out of use.

The or each slave station can integrally incorporate equipment which generates information to be transmitted to the master unit, and/or which receives control signals from it. The equipment may instead be connected to a slave unit which can function simply as an interface and which can be in modular form, with modules for adapting common circuitry to the particular piece of equipment.

The invention thus also provides an intelligent wiring system having a master unit communicating with slave units each comprising like basic circuitry and adaptive circuitry, conveniently in the form of a plug-in submodule, adapting it to a particular function.

In a vehicle incorporating an intelligent wiring system, it is important that any system failure does not result in a vehicle condition in which the vehicle is in any way unsafe or uncontrollable. Accordingly the invention provides an intelligent wiring system for a vehicle wherein at least the vehicle equipment necessary to manual control of the vehicle is or can be brought to a safe condition allowing such manual control in the event of system failure, either as diagnosed by the system itself or as noted by the operator. Thus, the or each slave unit of the system is therefore brought to a predetermined condition, in the event of failure, corresponding to a safe condition of the vehicle equipment with which it is associated. As a further safety feature, the failsafe condition preferably corresponds to one in which the equipment is earthed or grounded. For road vehicles incorporating an intelligent wiring system, it is advantageous to be able to use standard automobile cable in the system, which can be operated at a selected data handling rate accordingly.

The invention accordingly also provides an intelligent wiring sytem for a road vehicle in which information is transmitted at a rate such as to be capable of transmission on standard automobile cable.

The invention is further described below by way of example with reference to the accompanying drawings, in which:

Figure 1 is a schematic block circuit diagram of an intelligent wiring system embodying the invention;

Figure 2 is a schematic block circuit diagram of a control unit of the system of Figure 1; and

Figure 3 is a schematic block circuit diagram of a slave unit of the system.

The illustrated system is intended for use in a vehicle, in particular a road vehicle, and comprises a master or control unit 1 which communicates by dedicated three-wire highways 2 with a plurality of remote slave stations or units 4 which receive inputs from vehicle equipment 5,5a and/or supply control signals to such equipment. The "intelligence" of system is confined to the control unit 1, in which are performed all timing functions, switch logic, analogue processing etc.

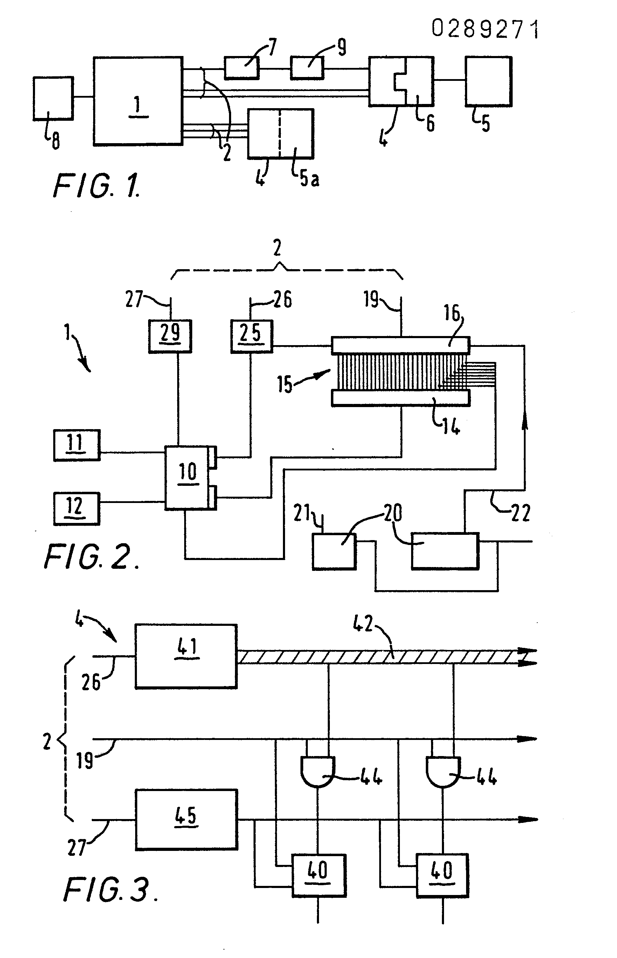

The control unit 1 a shown in Figure 2 incorporates a microcomputer 10 which can comprise a single chip 8-bit microcomputer, for example an NEC7810, coupled to a memory facility comprising a read only memory 11, constituted by an erasable programmable read only memory (EPROM), and a non-volatile random access memory 12 (RAM). The microcomputer 10 outputs to memory addressed latches 14 of an input/output (I/O) interface 15 with I/O transistor drivers 16 providing data pulses constituting a unit output on one wire 19 of a three-way highway 2. A power supply 20 provides 5 and 30 volts to the unit from the vehicle battery on lines 21 and 22 respectively. A clock driver 25 provides clock pulses to the microcomputer 10, to the I/O data driver 16, and to the slave units 4 on the second wire 26 of the three-wire highway 2, in order to synchronise the transmission of the data pulses on the wire 19. The third wire 27 of the highway extends from default/wake-up circuitry 29, connected to the microcomputer 10.

In the control unit 1, the necessary software can be stored in the EPROM 11 in an assembled form reached by merging three separate files of which one contains executive software for dealing with switch logic, analog processing input/output routines and the like. The second file contains macroroutines which interpret high level instructions and

**0 289 271**

convert them into the coding required by the executive software of the first file. Finally, the third file comprises a list of high level instructions specific to the actual vehicle equipment 5,5a with which the system interacts.

The slave unit 4, as shown in Figure 3, comprises one or more I/O driver/receivers 40 which can transmit data to the control unit 1 on the wire 19 by amplitude modulation of supplied data pulses. The slave unit 4 also includes counting logic 41 receiving the clock pulses from the line 26 and providing enabling signals on enabling lines 42 to permit transmission, by way of gates 44, of data pulses on the wire 19 to the I/O driver/ receivers 40. The unit 2 also has default/wakeup logic 45 communicating with the default/wakeup logic 29 of the controller unit 1 by way of the wire 27.

The slave units 4 are each operatively associated with an item of vehicle equipment 5,5a from which information is received and/or to which control signals from the unit 1 are supplied. The slave units 4 act simply as interfaces to satisfy vehicle equipment input/output requirements, so that communication with the control unit 1 can be by way of simple decoding logic. Communication between the control and slave units over the dedicated three-wire highway 2 is conveniently quite slow, at approximately 1500 bits per second, and at a relatively high voltage, for example 30 volts, so that the highway can be constituted by ordinary automobile cable whilst remaining highly resistant to problems of noise and connector contact resistance. The low speed and simple protocol of the transmission system removes the need for specialised interface hardware.

The slave units 4 are preferably of modular design, with some common circuitry, such as decoding logic. The units can be arranged to receive circuits from a library of circuits enabling each unit to be set up to serve the I/O requirements of the equipment in the part of the vehicle in which the unit is located. As illustrated in Figure 1, such a circuit can be embodied as a plug-in module 6 for co-operation with equipment 5. The vehicle equipment 5a of Figure 1 is of such a nature that it can be integrated with the associated slave unit 4, with space saving advantages. Such equipment 5a comprises for example vehicle light clusters and switch packs.

In the system illustrated, the wire 27 carries system status and control information. The status of the system as a whole can be established by an appropriate signal from a door lock switch 7, for example, or from the vehicle ignition switch, which sets a predetermined voltage level on the line 27 which the control unit 1 recognizes as a "wake-up" control signal. The system consequently alters from a quiescent state normal when the vehicle is out-of-use, that is, parked without lights, to an active one in response to signals from the controller unit logic 29 to the slave unit logic 45. In the active mode, the control unit 1 receives information from slave units providing it, and displays this information on a display device 8 and/or reacts to it by providing appropriate control information to appropriate slave units.

The logic 29 and 45 contains not only wake-up logic but also default logic responsive to one or both of a manual override input, for example, from a dedicated switch 9 located in the vehicle glovebox, and the sensing by watchdog software failure of the control unit 1, to provide default signals to the slave units 4. The receipt by the logic 45 of each slave unit 4 of such a default signal causes the unit to adopt a failsafe mode in which preselected driver/receivers 4 assume on or off conditions consistent with vehicle safety and with the provision of limited facilities permitting the vehicle to be driven. As a further safety measure, use is made of grounded or earthed connections in this failsafe mode.

A system embodying the invention can be capable of controlling all automobile systems, perhaps with an additional microprocessor to assist the microcomputer 3 where for example, air conditioning, message centres or all electric instrumentation is employed. Additionally, the controller unit can power and receive diagnostic information from, engine management systems, anti-lock brake systems, and active suspension systems. Although applicable to vehicles of a variety of kinds include waterborne vessels, caravans and motor cycles, the advantages of the invention may be realized also in manufacturing, as in industrial process lines.

The invention can of course be carried into effect otherwise than as specifically illustrated and described.

**Claims**

1. An intelligent wiring system comprising a master unit (1) in communication by means of a highway (2) with at least one slave unit (4), associated with an equipment unit (5,5a), wherein the or each equipment unit is arranged to be brought to a predetermined failsafe condition in the event of a system failure and/or to a manual override control input.

2. A wiring system as claimed in claim 1 wherein the or each equipment unit (4) is arranged to be earthed in the predetermined failsafe condition thereof.

3. A wiring system as claimed in claim 1 or 2 having in the control unit (1) default logic in communication by means of the highway (2) with default logic in the or each slave unit (4).

4. A wiring system as claimed in claim 1, 2 or 3 having a manual override control device (9) for causing the or each equipment unit (5,5a) to assume the failsafe condition thereof.

5. A wiring system as claimed in claim 1, 2, 3 or 4 wherein the or each slave unit (4) is of modular form and comprises means (6) adapting the unit for communication with the associated equipment unit (5).

6. A wiring system as claimed in any preceding claim wherein system timing functions, switch logic and processing are performed in the master unit (1) only.

7. A wiring system as claimed in any preceding claim wherein the highway (2) comprises a three-wire highway (19,26,27) of which one wire (19) carryies information signals, another wire (26) carries clock pulses for co-ordinating master and slave unit operations, and the third wire (27) carries default information.

8. A wiring system as claimed in claim 7 wherein the third wire (27) carries status information.

9. A wiring system as claimed in any preceding claim wherein at least one of the slave units (4) is integrally constructed with the associated equipment unit (5a).

10. A wiring system as claimed in any preceding claim when incorporated in a road vehicle, the system operating at a rate such that the highway (2) can be constituted by standard automobile cable.

11. An intelligent wiring system comprising a control unit (1) in communication with a plurality of slave units (4) each associated with a respective equipment unit (5,5a), at least one of the slave units being of modular form for ready adaptation to equipment unit requirements.

12. A wiring system as claimed in claim 5 or 11 wherein the or each modular slave unit (4) comprises a plug-in module (6) for adaptation to the associated equipment unit (5).

13. A vehicle wiring system comprising a control unit (1), at least one slave unit (4) positioned remotely therefrom, and a dedicated highway (2) for communication between the units, the communication being conducted in such a way that the highway can be constituted by conventional automobile cable.

14. A wiring system as claimed in claim 10 or 13 wherein the communication is conducted at approximately 1,500 bits per second.

0289271

FIG. 1.

FIG. 2.

FIG. 3.